# EUROPEAN PATENT APPLICATION

(11) **EP 3 718 850 A1**
(43) Date of publication of application: **07.10.2020**
(21) Application number: 20164550.4
(22) Date of filing: 20.03.2020
(51) Int. Cl.: B61D 19/02, B61L 15/00

(54) **SYSTEM AND METHOD FOR DOOR ERROR DETECTION**

(30) Priority: 04.04.2019 SE 1950417
(71) Applicant: ICOMERA AB, 411 03 Göteborg (SE)
(72) Inventor: Bjurström, Joel, 416 57 Göteborg (SE)
(74) Representative: AWA Sweden AB

(57) **Abstract**

The present inventive concept relates to a system and a method for monitoring an operation of a door of a public transportation vehicle. The system comprises at least one optical sensor unit arranged at a distance from the door, and the at least one optical sensor unit is configured to record a movement of the door during opening and/or closing of the door. The system also comprises a control unit, wherein said control unit is arranged to be connected to the at least one optical sensor unit, and is configured to determine a position of at least one reference point of the door based on the recorded movement of the door, determine a parameter of the movement of the door during opening and/or closing based on the determined position of the at least one reference point, determine a deviation of the parameter of the movement from a predetermined/allowed range of values of the parameter and determine an error in the operation of the door based on the determined deviation.

## Description

### Technical field of the invention

The present invention relates to a monitoring operation of doors of a vehicle, and more specifically to a system and a method for monitoring operation of doors of a public transportation vehicle.

### Background

Vehicles for public transportation, such as trains, buses, trams, etc. rely on efficient and trouble free operation of the vehicle doors. Door failure and mechanical problems with opening and closing of doors are regarded as serious safety issues as they may lead to passenger injuries and potential danger to human lives, with the risk of doors opening prematurely or closing too hard in an uncontrolled manner. Additionally, malfunctioning doors lead to delays, cancelations and customer dissatisfaction and eventually loss of productivity and revenue. Thus, when a door error occurs, the vehicle often needs to be taken out of service immediately, and taken into repair service.

Many mechanical errors can be automatically detected and identified before becoming serious through installation of appropriate sensing and alarm systems. For example, it is known to monitor the current of an electrical motor operating the doors during the door movement when motor-driven door actuators are used. Deviation from norm values may by determined by the sensor, e.g. related to abnormally high or low mechanical resistance experienced by the motor, and this may then be identified as an error, and may be used to trigger an alarm signal. As another example, in pneumatically controlled doors, it is known to use pressure sensors allowing similar analysis of the door operation. However, all the above-mentioned techniques have the drawback of requiring installation of sensor hardware, signal processing and data analysis units dedicated for this. Cost of installation of such solutions may be difficult to motivate especially as a retrofit on existing vehicles.

Therefore, there is a need for improvements in this field, and in particular for a system that is reliable and yet cost-effective to produce, install and operate. There is also a need for early detection of emerging errors, in order to be able to detect errors before they become too serious, thereby e.g. enabling repair of the doors at regular and planned servicing of the vehicle.

### Summary of the invention

In the following, desirable features and characteristics of the present invention to address the above issues will become apparent from the subsequent detailed description and the appended claims, taken in conjunction with the accompanying drawings and the foregoing technical field and background.

It is an object of the present invention to alleviate all or at least some of the above-mentioned drawbacks of presently known systems.

This object is achieved by a system and a method for monitoring the operation of a door of a public transportation vehicle, as defined in the appended claims.

According to a first aspect of the invention there is provided a system for monitoring an operation of a door of a public transportation vehicle, the system comprising:
at least one video camera arranged at a distance from the door, the at least one video camera being configured to record a movement of said door during opening and/or closing of the door;
a controller arranged to receive video data from the video camera, and further being configured to:
   determine a position of at least one reference point of said door in said video data;
   determine a parameter, as a function over time, of the movement of said door during opening and/or closing from said video data, and based on the determined position of the at least one reference point;
   determine from the determined parameter whether the movement of the door is normal or anomalous.

A public transportation vehicle is a vehicle which may be included in a fleet of vehicles, and which is used for public transportation, e.g. in a public transportation system. The public transportation vehicle may be a vehicle to carry passengers and cargo such a bus, a mini-bus, a transportation van, a train of a railway system, a train of a subway system, a tram, a rapid transit train, an autonomous or semi-autonomous vehicle, etc.

By "a parameter of movement of the door" is meant a characteristic by which any mechanical movement of the door of a vehicle can be identified. Such characteristic may be a real time position of the door as a function over time, i.e. a series of data of the positions at different time positions during a continuous movement of the door. However, the parameter may additionally or alternatively be a velocity of the movement of the door, as a function over time, the acceleration with which the door moves during opening and closing, as a function over time, etc.

With the inventive system, monitoring of the operation of the doors in a public transportation vehicle can be realized in a very reliable way. The invention is based on the realization that by studying e.g. the position over time of a door movement, it is possible to identify emerging errors at a very early stage. Further, the monitoring can be made in an automated way, and can be made continuously, every time the door is moved.

Hereby, the status of the operation of vehicle doors can be monitored so that anomalies are detected before the errors become too serious. One advantage of such continuous monitoring is that by timely identification of any malfunctioning in the system of operation of the doors, the maintenance and repair procedure can be accordingly planned. For example, this allow door errors to be repaired during regular servicing of the vehicle. This in turn enables the public transport system to significantly reduce unwanted delays due to faulty doors, increase passenger satisfaction, reduce maintenance costs and contribute to increasing productivity.

Further, the system is very cost-efficient. Video cameras are nowadays relatively low in cost, and thus, providing dedicated video cameras to monitor each door does not require any great investment. However, since video cameras are already present on most public transportation vehicles, and in many cases already directed to monitor inter alia the doors, an even more cost-effective solution is to use such surveillance cameras also for monitoring the operation of the doors.

Thus, in accordance with one embodiment, the video camera is a surveillance camera connected to a surveillance system of the public transportation vehicle. In particular, the video camera may be a closed-circuit television, CCTV, camera.

Thus, the video camera may in addition be part of a surveillance camera system of the public transportation vehicle. The surveillance camera system may preferably be installed in multiple locations of a cabin or carriage of the public transportation vehicle The surveillance camera system may be installed inside or outside the cabin or carriage of the vehicle.

The cameras may be distributed in the inner space of the vehicle such that they may have the same or different distances and the same or different viewing angles toward the doors. The cameras may preferably view the inner frame of the door, a space between the door and the body of the vehicle, as well as full horizontal and vertical front view of the door blades. The system may preferably comprise a plurality of cameras which are aligned to cover at least one door blade. Such a multitude of cameras makes it easier to exactly determine the three-dimensional movement of the door.

The video feed of each door or each door blade, both from the inside and the outside may be assigned a unique identification tag The identification tag may be in form of a digital identification file ID. The file may be a session file including the recorded video feed, and operation information of the vehicle door including date, time, location of the door, etc. As it should be appreciated, this way each door is arranged to be uniquely identified in the monitoring system with the information package associated with the door stored in a session file with the identification tag of the door. The session file of each identified door may keep its original ID during all steps of monitoring process or may be assigned an updated ID after each step. In all cases the operation data is uniquely associated with the same door. The session files of the doors may be stored in a local or remote database or a local or remote data storage unit and easily retrieved upon request.

The sensitivity and resolution of the cameras may be selected such that the recorded video is suitable for further data processing such as image processing or to be used as an input for machine vision algorithms.

In an exemplary embodiment of the present invention one or more surveillance cameras may be installed outside the public transportation vehicle. The cameras may be pointed at the same or different angels of the outer parts of the vehicle doors. The cameras may have the same or different distances from the doors. The video feed from the outside cameras may be used for monitoring the operation of the vehicle door on its own or may be used in combination with the video feed from the surveillance cameras inside the vehicle and monitoring the inner parts of the same door.

It should be considered that in addition to the vehicle surveillance system other tracking sensor equipment may also be installed on board of the vehicle. For example, additional optical sensors, such as infrared tracking sensors may be used, configured to track the movement of the vehicle doors using the infra-red wavelengths. The vehicle surveillance system may further be equipped with laser distance sensors and range finder systems based on the requirements of the monitoring system.

The vehicle doors may be operated in various fashions, as is per se known in the art. For example, the doors may be operated pneumatically, electrically, hydraulically, mechanically, and the like.

In accordance with another exemplary embodiment of the present invention the movement of the doors may be monitored based on the movement of at least one reference point on or at the doors. The movement of the reference points may preferably be used as a proxy for movement of the doors. The optical sensors may track the movement of the door during opening and/or closing of the doors and record the position of the reference point on the door. The reference point of the door may be at least one of a mark and a recognizable geometrical feature. The reference point may e.g. be determined with Canny edge detection. The recognizable geometrical feature may e.g. be a specific edge, corner or the like, located on the door blade, a window, or other discernible part of the door. In case a specific mark is used, the mark may e.g. be painted or adhered to the door at a desired position. The markings may e.g. be reflective stickers, coloured markings, industrial marking tapes and the like which can easily be identified and tracked by the surveillance camera system of the vehicle. It is also feasible to use a door handle of the door or any other physical part of the door suitable for being optically identified and tracked.

The step of determining whether the movement is normal or anomalous may comprise determining whether the determined parameter fall within a predetermined allowed range of values for said parameter. By "falling within a predetermined/allowed range of values" here means that a parameter for a door, when the door is operated in normal and fully functional state, has a range of values which represent a correct operation of the door in that movement. Such normal values, and some additional range around these values, due to variance etc, may be considered to be the predetermined/allowed range. When a measurement of that parameter during movement of the door returns a value which falls outside the allowed range of values associated with correct operation of the door, a difference or deviation from normal state occurs. By determining such deviation through comparison of measured and predefined nominal/allowed values, an error in the movement of the door is determined. Hereby, a continuous monitoring of the door operation during opening and/or closing is achieved and the efficiency of error identification at early stages is significantly improved. Further, this allows minor deviations falling outside the predetermined/allowed range to be detected as minor errors, whereas greater deviations may be determined to be more serious errors. Further, the determination may also comprise comparing the deviations with previously recorded data for the same door, to see whether there is a trend towards greater deviations or not. If there is a trend towards greater deviations, this may e.g. be used to predict when in time the error will develop into a serious matter.

The parameter may be a position function of the reference point as a function over time. Thus, the parameter defines the movement of the reference point along a determined path. However, additionally or alternatively, the parameter may be a velocity of the reference point as a function over time. Additionally or alternatively, the parameter may be an acceleration of the reference point as a function over time.

Thus, the determination of whether the movement is normal or anomalous may comprise determining whether the determined parameter deviates from stored previously recorded data for the same parameter and related to the same door.

The determination of whether the movement is normal or anomalous may additionally or alternatively comprise determining whether the parameter, as a function over time, deviates from normal operation of such doors, based on artificial intelligence with access to a database of recordings of the same parameter, as a function over time, for a plurality of previously recorded doors. To this end, the artificial intelligence have access to a plethora of recorded door movements, both working normally and working with an anomaly, and based on this data, the artificial intelligence can be trained to discern anomalies in a fresh recording of a door movement.

The controller may be at least partly arranged in a control unit on-board said public transportation vehicle. However, the controller may also be at least partly arranged in a central control unit, arranged externally from said public transportation vehicle, and wherein the vehicle further comprises a communication unit, configured to wirelessly communicate with said central control unit. The controller may also be a distributed controller, arranged in parts at different locations, such as partly in the vehicle and partly in the central control unit.

In case an on-board control unit is used, the system may preferably make use of already available on-board computing capacity of the public transportation vehicle, such as a communication router, a surveillance controller or the like. The advantage of using the existing computer systems which have access to the camera feed is to lower the installation costs significantly. However, the system may also be implemented as a stand-alone system, for example for use in existing or older models of the vehicle not having the surveillance camera system and/or the communication system as a default.

The control unit may comprise a computing system including an image processing module and a data analysis module. The computing system may be arranged to run image processing and machine vision algorithms. The computer vision system may be configured to process and synthesize data and information from the video camera e.g. to detect, identify, track and analyse the position of the reference points of the vehicle doors. Further, the computer vision system may predict the presence, location, classification and/or trajectories of the reference points, objects and features in the environment inside or outside the vehicle. The computing system of the control unit may preferably compute the translational motion of the doors of the vehicle based on the tracking data of the reference points on the vehicle doors generated from machine vision algorithms in one, two or three dimensions. The control unit may be arranged to assign a unique identification tag to each recorded video feed and door operation information stored in the data storage unit. The control unit may further be configured to store the data in a data storage unit, associated with suitable ID tags, to allow use of the data for e.g. trend analyses.

In various exemplary embodiments of the present invention, the control unit may be arranged to use a plurality of data points associated with the position of one or more reference points on the vehicle door to arrive at a parameter of the door movement. Such parameter may be a real-time position function of the reference point, a position function of a plurality of recorded position data of the at least one reference point, a velocity function of a single or plurality of recorded position data of the at least one reference point or an acceleration function of a single or plurality of the recorded position data of the at least one reference point.

The control unit may be configured to determine a time window during which a door movement is expected. This can be used e.g. to trigger recording of video data during this window. It may also, additionally or alternatively, be used to determine that the movement of the door is anomalous if the door movement is not initiated during this time window. Thus, if the processing of the position of any individual door blade does not recognise a non-anomalous movement within this time window a signal may be generated by the control unit and an alarm may be triggered.

It is also possible to assign different time windows for different functions, such as a first time window for determining that the door movement was not initiated in due time, and another, second, time window, preferably longer than the first one, during which recording of video data should be made.

Thus, in accordance with an embodiment of the present invention, the control unit may be configured to determine the parameter of the movement of the door over a predetermined time period.

The predetermined time period, or time window, may be activated e.g. when a door opening signal from a door control system of the public transportation vehicle is detected by the control unit. Thus, the synchronisation trigger may be taken from the electrical signal within the vehicle's door control circuitry which commands the opening of doors, and may then also be supplied to the processing units of the inventive system, whereby the above mentioned time window may begin at the instance of the door opening signal, and extend for at least the time duration of a non-anomalous door movement, and preferably for a longer time, to enable recording of door movements which are slower than normal, due to an anomaly.

The predetermined time period, or time window, may also be activated e.g. when a luminescence signal from one or more illuminators of the door of the public transportation vehicle is detected by the video camera, or by an additional optical sensor. In this embodiment, advantage is taken from the fact that lights are often present near the doors, and lit as the doors are about to open. Such lights may be coloured warning or attention signal lights or lights for illumination of the area around the doors. In this embodiment additional processing of the video feed related to the door may be performed and the luminance of such lights may be determined. When the lights turn on, a synchronisation trigger may be generated to start the time window. The time window may be closed after either a fixed amount of time or when the lights are detected to have turned off.

The predetermined time period can also be set by an operator at any fixed value based on the requirements of the system. For example, the predetermined time period may be arranged to be equal to a time period of opening and/or closing of a fully functional door of the public transportation vehicle. The predetermined time period may be arranged to be equal to an actual duration of opening and/or closing the door under evaluation. The data acquisition by the video camera may have any repetition intervals set in the monitoring system e.g. at every event of opening and/or closing the doors, once every hour, once per day, or the like. However, the video data may also be recorded continuously, and be continuously or periodically analysed to detect any occurrence of a door movement.

Any parameters of the movement of the doors of the public transportation vehicle, e.g. the position function, the velocity function, the acceleration function, etc. may be arranged to be recorded and computed over this predetermined time window or any other time period required to realize different designs of the door monitoring system. For instance, the predetermined time period may be a fraction of the time needed for the full opening and/or closing of the fully functional door, or it may be exceeding this time, such as double, triple or the like of the time for opening and/or closing of the door under evaluation or the fully operative door.

The controller may be configured to generate an alarm signal upon determination that the movement of the door is anomalous. The generated alarm signal may be a sound signal, an optical signal e.g. flashing danger lights, an alert notification in the vehicle operation display e.g. a pop-up alert, or an instance recorded in a log data of the vehicle. The alarm signal may also be a message sent to a predetermined recipient. The alarm signal may be registered in a vehicle diagnostics log data and be used at the time of maintenance service of the vehicle. The alarm signal may also be communicated to the driver of the public transportation vehicle, e.g. to take proper measures to ensure the integrity of door functionality or take actions to halt the operation of the vehicle in case the faulty door imposes any hurdles for further operation of the vehicle. The alarm signal may also be communicated to the passengers on board to keep a safe distance from the faulty door or as a signal to prepare the passengers to evacuate the vehicle.

The controller may further be arranged to determine the severity of the door movement anomaly, e.g. based on how much the determined parameter deviates from a normal state, and thereby issue different alarm signals, and to different recipients, based on this severity.

The alarm signal may also be sent directly to a remote data centre or a central vehicle management system which may in turn take actions e.g. by taking the vehicle out of its routine operation schedule or activating a repair protocol for the faulty door or the like.

In accordance with another exemplary embodiment of the present invention the system further comprises a communication unit or a communication system comprising such a communication unit. The communication unit may be a mobile router. The communication unit may be configured to wirelessly communicate with the remote data centre.

The communication unit may connect to a Wide Area Network (WAN) in accordance with Wireless Local Area Network (WLAN) standards e.g. IEEE 802.11 standard, Local Area Network (LAN), dedicated short range communication (DSRC) channels, or any other short or long-haul communication network for receiving and transmitting information. The communication unit may be configured to be a part of the control unit or a stand-alone unit connected to the control unit. The communication unit may be arranged for receiving and transmitting information on board of the vehicle or to one or more remote data centres or the central vehicle management system. Further, the communication unit may be arranged to communicate via any telecommunication technology, such as via 3G, 4G, 5G, etc.

The control unit may be arranged on board of the public transportation vehicle or may be arranged at the remote data centre, or may be arranged distributed among these units. The control unit may be integrated within the communication unit or any available on-board computer network to connect to the video cameras, e.g. surveillance cameras, the data storage unit, etc.

The remote data centre may be a part of the central vehicle management system. The remote data centre may be arranged to have wireless communication functions and necessary equipment such as antenna structures, routers, mobile sender/receiver equipment, etc. and may use WLAN standards or cellular data communication network to communicate with public transportation vehicles via establishing data links. The public transportation vehicle may also be equipped with wireless communication equipment such as antenna structures and routers to establish communication data links with the remote data centre and remote control unit.

In accordance to another exemplary embodiment of the present invention, the control unit is configured to generate a diagnostic data report of the movement of the door of the public transportation vehicle based on the determined parameter of the movement of the door. The diagnostic data report may be stored in the local data storage unit or sent to the remote data centre and stored in a remote data storage unit.

In accordance to yet another exemplary embodiment of the present invention the control unit is configured to generate a request-to-service signal based on the diagnostic data report of the movement of the door of the vehicle. Based on the level of seriousness and urgency of the determined error in the operation of the door, the control unit may arrange a request to schedule a repair service for the faulty door. The service can be scheduled as a supplementary maintenance service or simply can be added to the regular service scheme of the vehicle.

In another exemplary embodiment of the present invention the computing system may include a Canny edge detector. The information obtained by the Canny edge detector from the video feed of the cameras may be used as input to a Hough transform with the output of the Hough transform e.g. arranged to be limited to include angles within a small range around the possible angles of the vertical edges of the door blades as perceived by the video cameras, throughout the range of movement of the door. The Hough transform preferably identifies straight edge features parallel to the edge of the door blade in the video stream and localises them within the video frame.

In accordance to another embodiment of the present invention, a feature-based tracking algorithm such as Harris or Shi-Tomasi corner detection or the multiple instance learning (MIL) tracker algorithm may be used to track visual features on the door blades as proxies for the movement of the door.

One- or two-dimensional positions of tracked visual features on the doors may be presented as a function over time to a curve-fitting algorithm, the result of which may be compared with a nominal door movement curve. If the fitted curve matches the nominal curve within an allowed window of variance, a non-anomalous door movement event may be recorded.

Further, the one-, two- or three-dimensional positions of tracked visual features maybe presented as a function over time to an artificial neural network trained on a set of non-anomalous door movements. If the network recognises the function shape, a non-anomalous door movement event is recorded.

According to another aspect of the invention there is provided a method for monitoring an operation of a door of a public transportation vehicle, the method comprising:
recording video data of a movement of said door during opening and/or closing of said door;
determine a position of at least one reference point of said door in said video data;
determine a parameter, as a function over time, of the movement of said door during opening and/or closing from said video data, and based on the determined position of the at least one reference point;
determine from the determined parameter whether the movement of the door is normal or anomalous.

With this aspect of the invention, similar advantages, exemplary embodiments and preferred features are present as in the previously discussed aspect of the invention, and vice versa.

These and other features of the present invention will in the following be further clarified with reference to the embodiments described hereinafter.

### Brief description of the drawings

For exemplifying purposes, the invention will be described in closer detail in the following with reference to exemplary embodiments thereof illustrated in the attached drawings, wherein:
Fig. 1 is a schematic illustration of a side view of an interior of a vehicle cabin in accordance with an embodiment of the present invention;
Fig. 2A is a schematic illustration of a side view of a door of a vehicle in accordance with an embodiment of the present invention;
Fig. 2B is a schematic illustration of a position curve of a door of a vehicle in accordance with an embodiment of the present invention;
Fig. 3 is a schematic illustration of an external data center, a remote central controller, in accordance with an embodiment of the present invention; and
Fig. 4 is a schematic illustration of a flowchart of an error determination process in accordance with an embodiment of the present invention.

### Detailed description

In the following detailed description, some embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

The basics of data communication, wireless communication, computer data processing and image processing algorithms and image analysis are considered to be readily understood by the skilled person in the art and therefore for the sake of brevity, further explanations and details will be omitted in the rest of the description.

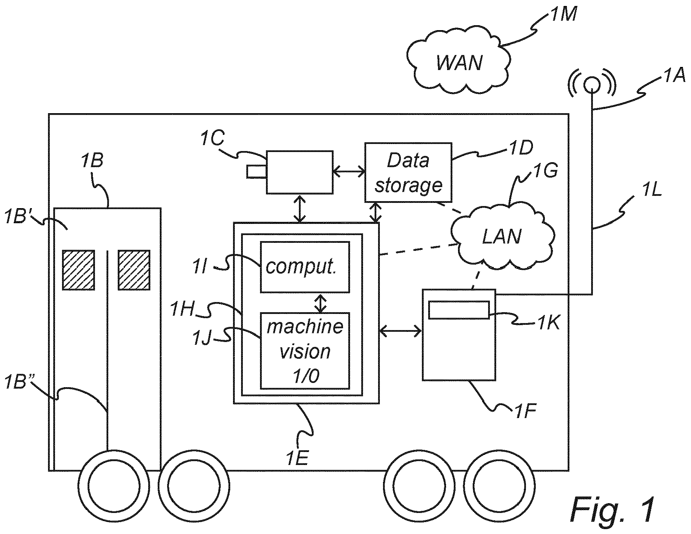

In Fig. 1 a schematic illustration of a side view of an interior of a vehicle cabin 1A is provided. The vehicle cabin 1A comprises at least one remotely controlled vehicle door 1B, which can be positioned in any part of the vehicle cabin 1A, such as in at least one of the front, the rear and the middle of the vehicle. Preferably, the vehicle comprises a plurality of remotely controlled doors, such as two, three or more doors. The doors may be controlled remotely, e.g. by the driver, and may be moved pneumatically, hydraulically, mechanically or electrically. The door(s) may comprise a single door blade, covering the entire door opening, or two door blades, each covering about a half of the door opening.

The vehicle cabin may be a single cabin or carriage of a public transportation vehicle for transporting passengers and goods or a part of a plurality of cabins belonging to the same vehicle. The public transportation vehicle is a vehicle suitable for transportation of passengers and goods such as a bus, minibus, tram, train, transportations van, and the like.

The door 1B of the vehicle is arranged with at least one door blade 1B', where the door blade can have freedom of movement in both horizontal and vertical directions. The door may be arranged to be a bi-folding door, with which allows the panels of the door to fold up against the vehicle sidewall. Further, the door may preferably be arranged to be a sliding door where door blades are mounted or suspended from a track and open/close by sliding horizontally alongside or into the vehicle sidewall or opened/closed by sliding vertically into the vehicle sidewall or the floor of the vehicle. The door may e.g. have two door blades arranged to move in the opposite directions relative to each other when opening or closing. In this case, edges of the door blades are secured at a middle point 1 B" in the completely closed condition of the door. The door blades 1B' are here arranged to move away from each other during opening of the door or move towards each other during closing of the door.

At least one video camera 1C is arranged at a distance from the vehicle doors 1B, and preferably within the cabin, and directed so that it has a good line-of-sight towards the door. The video camera 1C may be any camera intended for video recording, but is preferably a surveillance camera of the vehicle. Surveillance cameras are already provided on many public transportation vehicles, whereby monitoring of the doors may take advantage of the on-board surveillance system or CCTV cameras installed inside the cabins and carriages of the vehicles. Hereby, the cost efficiency of the door monitoring system is significantly reduced since the invention alleviates the requirement of installing separate door monitoring sensors. Further the system can be installed at marginal costs and be easily adapted to the older models of transportation vehicles not equipped with surveillance cameras as a default system. However, the video camera may also be dedicated to the door monitoring, e.g. when realized as a stand-alone system.

The surveillance camera 1C installed in the cabin of the vehicle is arranged to record a video feed of the doors 1B of the vehicle e.g. during opening and/or closing of the doors. The surveillance camera unit 1C is arranged to be connected to the data storage unit 1D.

The data storage unit 1D is arranged to receive the video feed from the surveillance cameras of the vehicle and store the video information for further processing in the system. The data storage unit 1D is arranged to be connected to a control unit 1E of the system. In case multiple doors are present, the video information can be stored with an identification tag for each door. Further, the data is preferably stored in association with a time when the video data was recorded.

The control unit 1E is arranged to retrieve the recorded data of the vehicle door operation e.g. the recorded video feed, from the data storage unit 1D and to determine normal or anomalous operation of the door. The control unit comprises a computing system 1H. The control unit 1E may coordinate the flow of data between the computing system 1H and other components. For example, the control unit 1E may assign an identification tag to a video feed associated with the vehicle door stored on the data storage unit 1D and send instructions to the computing system 1H to access the aforementioned video feed data for processing. The computing system 1H may further comprise an image processing and/or machine vision algorithm module 1I and a data analysis and computation module 1J. The video feed data then, preferably, undergoes an image processing step where the position of at least one reference point on the vehicle door is identified by using e.g. Canny edge detector or other feature-based tracking algorithms such as Harris or Shi-Tomasi corner detection or MIL tracker algorithm. The results of the machine vision processing are then fed into the data analysis and computation module 1J. This module 1J is arranged to compute a parameter of movement of the door during the time period when the door is opened and/or closed. This parameter may be a position, velocity or acceleration function of the movement of the door based on the known positions of the reference points of the door during the time period for which the image analysis has been performed.

It is to be acknowledged by the skilled reader that even though the control unit 1E, the computing system 1H, the computation module 1J and the data storage 1D are here illustrated as being arranged on-board the vehicle, all or part of these units/functions may be arranged at another location, such as in a central controller, or be distributed among such multiple locations. Further, these modules/systems/functions may be realized in hardware, e.g. in dedicated units, or be arranged fully or partly in software. It is also possible to provide these modules/systems/functions as stand-alone units or integrated with other data processing systems on-board the vehicle, such as a surveillance system and/or a communication system.

The system may also comprise a communication unit 1F, or a communication system comprising such a communication unit. The communication unit preferably comprises at least one router module 1K, or mobile router, for data reception and transmission between an internal Local Area Network (LAN) 1G provided on-board the vehicle for connection to one or more client devices, and one or more Wide Area Networks (WANs) 1M. The communication unit 1F may also be arranged to communicate with various units inside the vehicle e.g. the data storage unit 1D, the control unit 1E, etc. via the LAN 1G. The LAN 1G is preferably a wireless network using one or several internal antennas to communicate with different units on-board. The LAN 1G may also be set up as a wired network. The communication unit may be arranged to use at least one, and preferably a plurality of, antenna unit(s) 1 L to communicate with external WANs 1M.

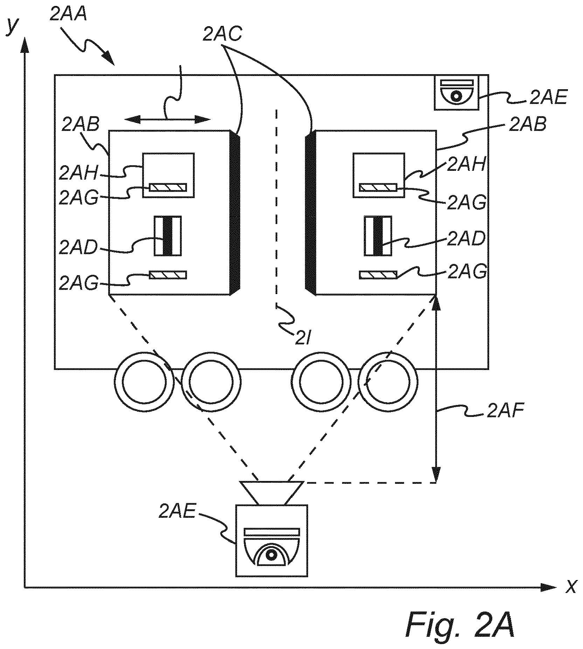

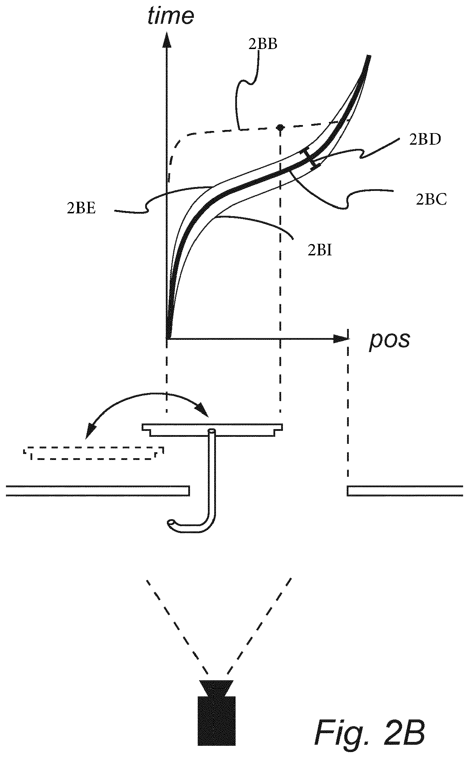

An exemplary embodiment of determining an error in the operation of the vehicle door will now be described with reference to Figs. 2A and B.

In Fig. 2A a schematic illustration of a side view of a door of a vehicle in a vehicle cabin 2AA is provided. Door blades 2AB are provided with predetermined artefacts or recognizable features 2AC and 2AD, such as physical parts on the body of the door blades 2AB providing recognizable geometrical features, or markings or the like added to the door blades. The movement of e.g. the edges of door blades 2AC, a part of the door handle 2AD, or any other recognizable feature, serving as a reference point, is tracked by at least one surveillance camera 2AE inside the vehicle cabin arranged at a known distance 2AF from the door blades 2AB. In one embodiment, the door blades are provided with external markings 2AG on at least one part of the surface of the door blades 2AB or on the surface of vehicle windows 2AH. The camera 2AE is arranged to record the movement of the door edges 2AC, or other recognizable features, during the opening and/or closing of the door blades 2AB. Here, it is determined by the control unit 1E that the camera 2AE is to start recording the movement of the door when the door blades 2AB start to move away from each other, in case the doors are opened, and continues the recording for the full duration of opening and closing of the doors. Start of the recording may also be initiated by a trigger, such as a signal for opening the doors, as discussed in the foregoing. Also, the recording may be continuous.

In Fig. 2B, after the image processing module 1I has identified the positions of the features 2AC, 2AD, 2AG in the recorded video, a one-or two-dimensional position function is created by the control unit 1E for each feature. The recorded result of tracking e.g. an exemplary feature 2BA of the door blade is then inserted into a curve-fitting algorithm by the data analysis module 1J of the control unit 1E. The identified curve 2BB may then be compared to an averaged curve 2BC associated with non-anomalous movement of the door, including a margin for variances. In the illustrative example, it is determined that the curve 2BB falls outside an allowed window of variance 2BD with the upper 2BE and lower 2BF boundaries around the averaged curve of allowed values 2BC and therefore an error in the operation of the doors is determined by the system.

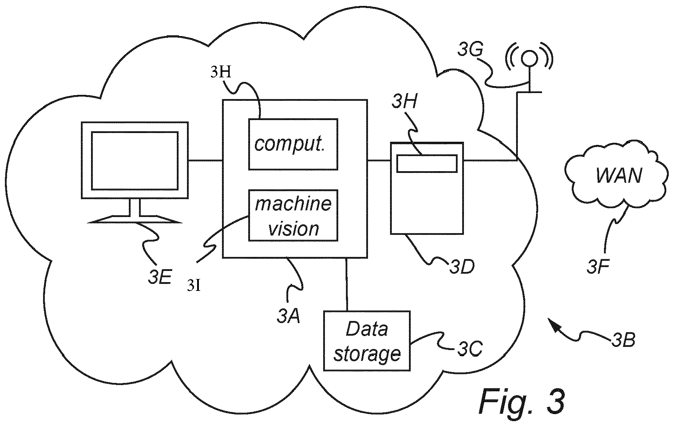

In Fig. 3 a schematic illustration of an exemplary external data centre is provided. As discussed in the foregoing, an external data centre may serve as a remote control unit, wherein the control unit 3A may be arranged at the remote data centre 3B. However, the remote control unit may also serve other purposes, such as receiving data from the controller of the vehicle, in order to determine present status of the door operation within the vehicle, to determine appropriate time of servicing, and the like.

In the illustrative example of Fig. 3, the control unit 3A is connected to a data storage unit 3C which is arranged to store the video feeds received form the vehicle. The control unit may e.g. comprise a computing system 3H may further comprise an image processing and/or machine vision algorithm module 31, a data analysis and computation module, etc. in the same way as discussed above in relation to Fig. 1. The control unit 3A is further connected to the communication unit 3D and to the central vehicle management system 3E. The communication unit 3D is arranged to send/receive data to/from the vehicle and is connected to at least one WAN 3F. the remote data centre is further provided with at least one antenna unit 3G for wireless communication. The communication unit further comprises a mobile router 3H for long range wireless communication with the vehicles.

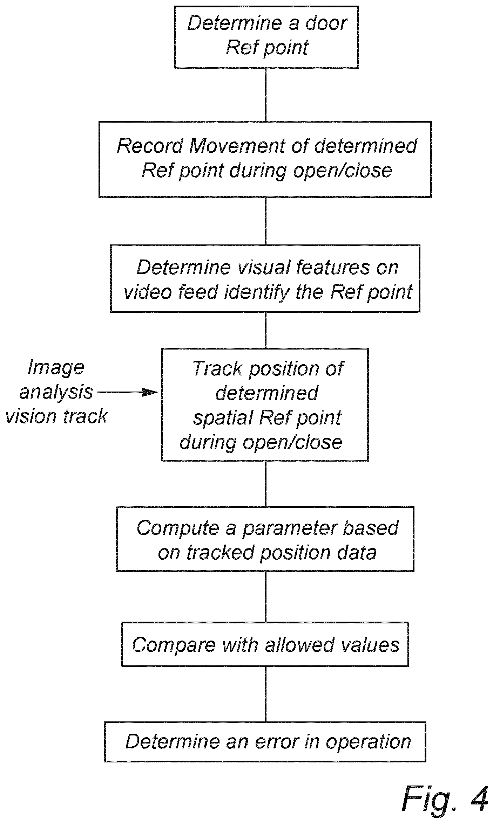

The method is schematically illustrated with the flow chart in Fig. 4. In a first step, a door reference point is determined. In a second step, a movement of the door, and in particular the reference point, is recorded, during opening or closing of the door. The video is then analysed, to identify the reference point, and, thereafter, to track the position of the determined reference point during the movement. Based on this a parameter, over time, is determined. This may then, e.g. be compared with allowable values, or a range of allowable values, to determine whether the door operates erroneously or not.

The invention has now been described with reference to specific embodiments. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. A system for monitoring an operation of a door of a public transportation vehicle, the system comprising:
at least one video camera arranged at a distance from the door, the at least one video camera being configured to record a movement of said door during opening and/or closing of the door;
a controller arranged to receive video data from the video camera, and further being configured to:
determine a position of at least one reference point of said door in said video data;
determine a parameter, as a function over time, of the movement of said door during opening and/or closing from said video data, and based on the determined position of the at least one reference point;
determine from the determined parameter whether the movement of the door is normal or anomalous.

2. The system of claim 1, wherein, the video camera is a surveillance camera connected to a surveillance system of the public transportation vehicle.

3. The system of claim 1 or 2, wherein the video camera is a closed-circuit television, CCTV, camera.

4. The system of any one of the preceding claims, wherein, the reference point of the door is at least one of a mark and a recognizable geometrical feature.

5. The system of any one of the preceding claims, wherein the reference point is determined with Canny edge detection.

6. The system of any one of the preceding claims, wherein the step of determining whether the movement is normal or anomalous comprises determining whether the determined parameter fall within a predetermined allowed range of values for said parameter.

7. The system of any one of the preceding claims, wherein said parameter is a position function of reference point as a function over time.

8. The system of any one of the claims 1-7, wherein said parameter is a velocity of said reference point as function over time.

9. The system of any one of the claims 1-7, wherein said parameter is an acceleration of said reference point as a function over time.

10. The system of any one of the preceding claims, wherein the determination of whether the movement is normal or anomalous comprises determining whether the determined parameter deviates from stored previously recorded data for the same parameter and related to the same door.

11. The system of any one of the preceding claims, wherein the determination of whether the movement is normal or anomalous comprises determining whether the parameter, as a function over time, deviates from normal operation of such doors, based on artificial intelligence with access to a database of recordings of the same parameter, as a function over time, for a plurality of previously recorded doors.

12. The system of any one of the preceding claims, wherein said controller is configured to generate an alarm signal upon determination that the movement of the door is anomalous.

13. The system of any one of the preceding claims, wherein the controller is at least partly arranged in a control unit on-board said public transportation vehicle.

14. The system of any one of the preceding claims, wherein the controller is at least partly arranged in a central control unit, arranged externally from said public transportation vehicle, and wherein the vehicle further comprises a communication unit, configured to wirelessly communicate with said central control unit.

15. The system according to any of preceding claims, wherein, said control unit is configured to determine a time window during which a door movement is expected, and to determine that the movement of the door is anomalous in door movement is not initiated during this time window.

16. A method for monitoring an operation of a door of a public transportation vehicle, the method comprising:
recording video data of a movement of said door during opening and/or closing of said door;
determine a position of at least one reference point of said door in said video data;
determine a parameter, as a function over time, of the movement of said door during opening and/or closing from said video data, and based on the determined position of the at least one reference point;
determine from the determined parameter whether the movement of the door is normal or anomalous.
